# EUROPEAN PATENT APPLICATION

(11) **EP 4 498 453 A1**
(43) Date of publication of application: **29.01.2025**
(21) Application number: 23774678.9
(22) Date of filing: 14.03.2023
(51) Int. Cl.: H01M 4/62, H01M 4/13, H01M 4/139

(54) **ELECTRODE BINDER, ELECTRODE, LITHIUM ION SECONDARY BATTERY, AND METHOD FOR PRODUCING ELECTRODE**

(30) Priority: 22.03.2022 JP 2022045337; 29.09.2022 JP 2022156728
(71) Applicant: Mitsui Chemicals, Inc., Tokyo 104-0028 (JP)
(72) Inventor: MIKAWA Nobuhisa, Sodegaura-shi, Chiba 299-0265 (JP); HOTANI Yohei, Sodegaura-shi, Chiba 299-0265 (JP); SUGIHARA Yuri, Sodegaura-shi, Chiba 299-0265 (JP)
(74) Representative: J A Kemp LLP
(86) International application number: PCT/JP2023/009910
(87) International publication number: WO 2023/182081

(57) **Abstract**

One embodiment of the present invention relates to an electrode binder, an electrode, a lithium ion secondary battery, or a method for producing the electrode, and the electrode binder includes an ultrahigh molecular weight olefinic polymer fine particle (A) that satisfies the following requirements (i) to (iii):
(i) the intrinsic viscosity [η] measured in a decalin solvent at 135°C is in a range of 5 to 50 dl/g;
(ii) the average particle diameter d50 in a mass-based particle size distribution by a Coulter counter method is in a range of 1 to 50 um; and
(iii) 50% by mass or more of the particles passes through a mesh sieve with an opening of 45 µm.

## Description

### Technical Field

One embodiment of the present invention relates to an electrode binder, an electrode, a lithium ion secondary battery, or a method for producing the electrode.

### Background Art

Lithium ion secondary batteries are compact and lightweight, have a high energy density, and can be charged and discharged repeatedly, and therefore they have been used in fields such as mobile phones and notebook computers. In recent years, with expansion of demand and applications for lithium ion secondary batteries, there are required, for examples, improvements in performance such as their stability, lower resistance, and larger capacities, as well as, for example, environmental considerations and cost improvements in production of lithium ion secondary batteries.

As a method for producing an electrode of a lithium ion secondary battery, a method for dissolving or dispersing a resin serving as a binder in a solvent, dispersing an active material and/or a conductive auxiliary agent therein to form a slurry, and coating a surface of a current collector with this slurry followed by volatilization of the solvent (wet method) is widely known.

In order to produce a rolled sheet such as a sheet for an electrode from powder including an active material, a method for producing an electrode by a dry method, wherein the powder is compression-molded using a powder rolling apparatus, is also known.

As a method for producing an electrode by the dry method, for example, Patent Literature 1 discloses a method for producing an anode capable of controlling lithium metal plating and gas generation by pre-doping the anode with lithium ions.

Moreover, for example, Patent Literature 2 discloses a method for optimizing powder characteristics of a positive electrode active material and a mixing step upon manufacture of a positive electrode material, to improve a charge/discharge capacity as battery performance.

### Citation List

### Patent Literature

[Patent Literature 1] JP2019-508896A
[Patent Literature 2] JP2020-202159A

### Summary of Invention

When a solvent is used as a dispersing medium for a binder in the wet method, the method requires a step of volatilizing the solvent that is not necessary for a battery, as result of which not only the step becomes complicated but also problems of safety and environmental impact arise. Moreover, the coating mass of the slurry is affected by, for example, a viscosity of a solvent, and a film thickness, requiring complex parameter control, which has made it difficult to simply fabricate an electrode material with a desired composition. Therefore, a safe and simple method for fabricating an electrode has been desired.

One embodiment of the present invention is to provide an electrode binder capable of fabricating an electrode by a dry method, wherein the electrode binder can obtain a battery excellent in a charge/discharge capacity. Another embodiment of the present invention is to provide an electrode capable of obtaining a battery excellent in a charge/discharge capacity and a method for producing the battery. Another embodiment of the present invention is to provide a lithium ion secondary battery excellent in a charge/discharge capacity.

### Solution to Problem

Means to solve the aforementioned problems include the following aspects.

<1> An electrode binder comprising an ultrahigh molecular weight olefinic polymer fine particle (A) that satisfies the following requirements (i) to (iii):
   (i) an intrinsic viscosity [η] measured in a decalin solvent at 135°C is in a range of 5 to 50 dl/g;
   (ii) an average particle diameter d50 in a mass-based particle size distribution by a Coulter counter method is in a range of 1 to 50 um; and
   (iii) 50% by mass or more of the particles passes through a mesh sieve with an opening of 45 µm.
<2> The electrode binder according to <1>, wherein the ultrahigh molecular weight olefinic polymer fine particle (A) has an average particle diameter d50 within a range of 3 to 15 µm.
<3> The electrode binder according to <1> or <2>, wherein the ultrahigh molecular weight olefinic polymer fine particle (A) is an ethylenic polymer fine particle.
<4> An electrode comprising the electrode binder according to any one of <1> to <3> and an active material.
<5> The electrode according to <4>, wherein the electrode is obtained by a dry method.
<6> A lithium ion secondary battery comprising the electrode according to <4> or <5> and an electrolyte.
<7> A method for producing an electrode, comprising
   a step of dry mixing the electrode binder according to any one of <1> to <3> and an active material to obtain an electrode composite material, and
   a step of producing an electrode comprising the electrode composite material and a current collector.

### Advantageous Effects of Invention

According to one embodiment of the present invention, an electrode binder capable of fabricating an electrode by a dry method, wherein the electrode binder can obtain a battery excellent in a charge/discharge capacity, is provided. According to another embodiment of the present invention, an electrode capable of obtaining a battery excellent in a charge/discharge capacity and a method for producing the electrode, are provided. According to another embodiment of the present invention, a lithium ion secondary battery excellent in a charge/discharge capacity, is provided.

### Description of Embodiments

The contents of the present invention will be described in detail below. The contents of the constituent features described below may be described based on the representative embodiments of the present invention, but the present invention is not limited to such embodiments.

In the present specification, "polymer " is a concept including a homopolymer and a copolymer.

In the present specification, the term "to" indicating a numerical value range is used in the meaning of including the numerical values described before and after "to" as the lower limit value and the upper limit value, respectively.

In the present specification, the term "to" indicating a numerical value range means that the unit described either before or after the numerical value range indicates the same unit, unless otherwise specified.

In the present specification, combination of two or more preferred aspects is a more preferred form.

### <<Electrode binder>>

An electrode binder (hereinafter also referred to as "the present binder") according to one embodiment of the present invention include an ultrahigh molecular weight olefinic polymer fine particle (A) (hereinafter also referred to as "particle (A)") that satisfies the following requirements (i) to (iii).
(i) The intrinsic viscosity [η] measured in a decalin solvent at 135°C is in a range of 5 to 50 dl/g;
(ii) The average particle diameter d50 in a mass-based particle size distribution by a Coulter counter method is in a range of 1 to 50 um; and
(iii) 50% by mass or more of the particles passes through a mesh sieve with an opening of 45 µm.

The present binder including the particle (A) satisfying the above requirements can fabricate an electrode by a dry method and obtain a battery excellent in charge/discharge capacity. The reason for this is not clear, but is conjectured as follows.

When an electrode is fabricated by the dry method, the electrode may be fabricated by pressing an electrode forming material (electrode composite material). The particles (A) included in the present binder, having an intrinsic viscosity [η] in the above range are unlikely to easily flow from the electrode even in a molten state upon the press, and can retain their shapes. Therefore, the particles (A) improve adhesiveness with, for example, an active material, and can inhibit themselves from falling off from the electrode.

The particle (A) included in the present binder has an average particle diameter d50 in the above range, and the less amount of coarse particles present, making it possible to inhibit generation of electrical defects while improving dispersibility of active material, for example. A space for stably intercalating and releasing lithium ions in an electrode can be further secured. As a result, the electrical conductivity of a (lithium ion secondary) battery can be ensured.

The particle (A) included in the present binder is an olefinic polymer, which is thereby excellent in resistance to solvent such as an electrolytic solution and electrical properties.

### <Ultrahigh molecular weight olefinic polymer fine particle (A) >

The particle (A) satisfies the following requirements (i) to (iii).

In the physical properties of the particle (A) below (including, for example, the average particle diameter d50), the particle (A) used as a raw material for the present binder may have the following physical properties.

The particle (A) used for the present binder may be one type or two or more types thereof.

Requirement (i): The intrinsic viscosity [η] measured in a decalin solvent at 135°C is in a range of 5 to 50 dl/g.

Within the above range of the intrinsic viscosity, the particles (A) are unlikely to flow from an electrode even in their molten state, and can retain their shapes. Therefore, the particle (A) can improve adhesiveness with, for example, an active material, and easily obtain a battery excellent in a charge/discharge capacity, and can fabricate an electrode by the dry method, which is preferred.

From the above viewpoint, the intrinsic viscosity [η] of the particle (A) is preferably 5 to 40 dl/g, more preferably 5 to 30 dl/g, further preferably 5 to 27 dl/g, and particularly preferably 10 to 27 dl/g.

Requirement (ii): The average particle diameter d50 in a mass-based particle size distribution by a Coulter counter method is in a range of 1 to 50 µm.

Within the above range of the average particle diameter d50, the particle (A) improves dispersibility of an active material, for example, to be able to inhibit it from falling off from an electrode, and to further secure a space for stably intercalating and releasing lithium ions in the electrode. As result, a battery excellent in a charge/discharge capacity can be easily obtained, and an electrode by the dry method can be fabricated, which are preferred.

From the above viewpoint, the average particle diameter d50 is preferably 35 µm or smaller, more preferably 20 µm or smaller, further preferably 15 µm or smaller, and particularly preferably 13 µm or smaller, and preferably 3 µm or larger.

Furthermore, the upper limit of the average particle diameter d50 is preferably 15 pm, more preferably 12 pm, further preferably 10 pm, and particularly preferably 8 µm. The lower limit of the average particle diameter d50 is preferably 1 µm and more preferably 3 µm. The range of the average particle diameter d50 is preferably 1 to 12 pm, more preferably 1 to 10 pm, further preferably 1 to 8 pm, and particularly preferably 3 to 8 µm.

Within the above range of the average particle diameter d50, more binders can penetrate between particles of an active material, for example, and even a small amount of the binder increases bondability with the active material, making it possible to achieve a desired effect even though the amount of binder used is reduced. Therefore, the amount of the active material, for example, in an electrode can be increased and as a result, can facilitate a battery excellent in battery performance to be obtained.

When the average particle diameter d50 of the particles (A) and the particle diameters of the positive electrode active material and the negative electrode active material described below are approximately the same as each other, the positive electrode active material and the negative electrode active material are less likely to fall off. The average particle diameter d50 of the particles (A) refers to an average primary particle size.

The average particle diameter d50 is a value at which a cumulative value of particle size distributions is 50% by mass, which was obtained by measuring a mass-based particle size distribution by a Coulter counter method. Specifically, it is obtained by the measurement method described in Examples.

Requirement (iii): 50% by mass or more of the particles (A) passes through a mesh sieve with an opening of 45 µm.

The particle (A) is a particle such that 50% by mass or more thereof passes through a mesh sieve with an opening of 45 µm (JIS Z 8801) by using a vibrating sieve or ultrasonic vibrating sieve. When the amount of the particles (A) passing through the mesh sieve with an opening of 45 µm is 50% or more relative to the total mass of the particles (A), a battery excellent in a charge/discharge capacity can be easily obtained, and an electrode can be fabricated by the dry method, which are preferred.

The amount of the particles (A) passing through the mesh being 50% by mass or more refers to the fact that a small amount of coarse particles is present. When few coarse particles are present, the amount of an active material, for example, retained by the particles (A) increases, which is considered preferable. Moreover, when few coarse particles are present, they are less likely to generate electrical defects and tend to be able to inhibit reduction in a battery capacity to be obtained. As a result, a battery excellent in a charge/discharge capacity can be easily obtained, which is considered preferable.

From the aforementioned viewpoint, the amount of the particles (A) passing through is preferably 90% by mass or more, more preferably 95% by mass or more, and further preferably 99% by mass or more.

Examples of the particle (A) include homopolymer particles such as a polyethylene, a polypropylene, a poly-1-butene, and a poly-4-methyl-1-pentene; copolymer particles using at least two types of α-olefins selected from, for example, ethylene, propylene, 1-butene, 1-hexene, 1-octene, and 4-methyl-1-pentene as raw materials.

The particle (A) is preferably an ethylenic polymer fine particle (for example, a homopolymer fine particle of ethylene, a copolymer fine particle of ethylene and one type or more types of α-olefins) and particularly preferably a homopolymer fine particle of ethylene.

The ethylenic polymer has a lower melting point than, for example, a polytetrafluoroethylene (PTFE) and a polyvinylidene fluoride (PVDF), and therefore upon fabrication of electrode, the ethylenic polymer can retain bonding force with an active material, for example, without raising temperature. Since the ethylenic polymer has also higher surface free energy than, for example, PTFE and PVDF, it has a high affinity with an active material, for example, resulting in also having high bonding force with the active material, for example. From the above viewpoint, the ethylenic polymer fine particle is preferred.

The content of a constituent unit derived from ethylene in a copolymer fine particle of the ethylene and one or more types of α-olefins is preferably 50 mol% or more, more preferably 80 mol% or more, further preferably 90 mol% or more, relative to 100 mol of the total constituent unit constituting the copolymer.

The melt flow rate (MFR) of the particle (A) is preferably less than 1.0 g/10 minutes, more preferably 0.5 g/10 minutes or less, and more preferably 0.01 g/10 minutes or more.

The MFR is measured under the conditions of 190°C and a test load of 21.6 kg in accordance with JIS K 7210-1 (2014).

The method for producing the particle (A) is not particularly limited as long as the particle (A) satisfies the above requirements (i) to (iii), but it can be produced, for example, by the method disclosed in the following literatures.
(1) WO2006/054696
(2) WO2008/013144
(3) WO2009/011231
(4) WO2010/074073
(5) JP2012-131959A

The particle (A) may use a biomass-derived raw material singly, a fossil fuel-derived raw material singly or both of the biomass-derived raw material and fossil fuel-derived raw material as its raw material (for example, monomers such as ethylene and an α-olefin).

The biomass-derived raw material is a raw material composed of all (renewable) natural raw materials and their residues as raw materials, such as those derived from plants or animals, including fungi, yeast, algae, and bacteria, and containing, for example, a ¹⁴C isotope as carbon at a proportion of approximately 1 × 10⁻¹², wherein the biomass carbon concentration (unit: pMC) measured in accordance with ASTM D6866 is approximately 100 pMC. The biomass-derived monomers (monomers such as ethylene and an α-olefin) can be obtained, for example, by conventionally known methods.

It is preferable for the particle (A) to include a constituent unit derived from a biomass-derived raw material from the viewpoint of reducing environmental burden (mainly greenhouse gas reduction).

For the particle (A), under the same conditions of particle (A) production, such as a polymerization catalyst, polymerization process, and a polymerization temperature, even though the particle (A) is a (co)polymer using a biomass-derived raw material, the molecular structure other than containing a ¹⁴C isotope at a proportion of approximately 1 × 10⁻¹² to 10⁻¹⁴, is the same as that of a (co)monomer composed of a fossil-derived raw material. Therefore, performance of a (co)polymer including a biomass-derived raw material and that of a (co)polymer composed of a fossil fuel-derived raw material are considered to be the same.

In terms of, for example, facilitating a battery excellent in a charge/discharge capacity to be obtained and facilitating an electrode to be fabricated by the dry method, the content of particles (A) in the present binder is preferably 80% by mass or more, more preferably 90% by mass or more, further preferably 95% by mass or more, and particularly preferably 97% by mass or more. The upper limit of the content is preferably 100% by mass.

### <Other component>

The present binder may further include other component in addition to the particle (A).

The other component is not particularly limited and examples thereof include conventionally known components, such as an olefinic polymer particle other than the particle (A), a polyvinyl acetate, a polymethyl methacrylate, a carboxymethyl cellulose (CMC), and a nitrocellulose, a fluororesin, and a rubber particle.

Examples of the fluororesin include a polytetrafluoroethylene (PTFE), a polyvinylidene fluoride (PVDF), a tetrafluoroethylene-hexafluoropropylene copolymer (FEP), and a vinylidene fluoride-hexafluoropropylene copolymer.

Examples of the rubber particle include a styrenebutadiene rubber (SBR) particle and an acrylonitrile rubber particle.

Each of the aforementioned other components may be used singly or two or more thereof may be used.

The content of the other component in the present binder is preferably 10% by mass or less, more preferably 5% by mass or less, and further preferably 1% by mass or less.

The content of the olefinic polymer particle other than the particle (A) in the present binder is preferably 10% by mass or less, more preferably 5% by mass or less, and further preferably 1% by mass or less.

The present binder is particularly preferably free of the other component (the content of the other component in the present binder is particularly preferably 0% by mass).

The other component may use a biomass-derived raw material singly, a fossil fuel-derived raw material singly or both of the biomass-derived raw material and fossil fuel-derived raw material as its raw material.

It is preferable for the other component to include a constituent unit derived from a biomass-derived raw material from the viewpoint of reducing environmental burden (mainly greenhouse gas reduction).

### <<Electrode>>

The electrode according to one embodiment of the present invention preferably includes the present binder and an active material.

Because the electrode includes the present binder, the electrode can be fabricated by a dry method, and a battery excellent in a charge/discharge capacity can be easily obtained.

The electrode is preferably an electrode obtained by a dry method. Note, however, the method for producing an electrode will be described below.

The electrode may be a positive electrode or a negative electrode.

### <Positive electrode>

The positive electrode is preferably an electrode capable of intercalating and releasing lithium ions, the positive electrode preferably includes the present binder, a conductive auxiliary agent, and a positive electrode active material, and more preferably comprises a positive electrode mixture layer containing the present binder, a conductive auxiliary agent, and a positive electrode active material, and a positive electrode current collector. In this case, the positive electrode mixture layer is arranged on at least a portion of a surface of the positive electrode current collector.

From the viewpoint of achieving both physical properties of the positive electrode mixture layer (for example, the electrolytic solution permeability and the peel strength) and battery performance, the content of the present binder in the positive electrode mixture layer is preferably 0.1 to 10% by mass and more preferably 0.1 to 4% by mass, relative to the total mass of the positive electrode mixture layer.

The content of the present binder of 0.1% by mass or more, allows adhesiveness of the positive electrode mixture layer to a positive electrode current collector and bondability between the positive electrode active materials to be further improved. The content of the present binder that is the upper limit or less, allows the amount of the positive electrode active material in the positive electrode mixture layer to be increased, as a result of which using the positive electrode mixture layer enables to facilitate a battery with a large capacity to be obtained.

A thickness of the positive electrode mixture layer is not particularly limited, and may be the same thickness as that of a conventionally known positive electrode mixture layer, but is preferably 30 to 500 pm, more preferably 30 to 300 pm, and further preferably 30 to 150 µm.

### [Positive electrode active material]

The positive electrode active material is preferably a material capable of intercalating and releasing lithium ions, such as a positive electrode active material commonly used in a lithium ion secondary battery.

The positive electrode active material may be used singly, or two or more types thereof may be used.

Examples of the positive electrode active material include
an oxide having lithium (Li) and nickel (Ni) as constituent metal elements; and
an oxide containing Li, Ni, and at least one metal element other than Li and Ni (for example, a transition metal element and a typical metal element) as a constituent metal element.

In the case of containing the metal element other than Li and Ni, the metal element is preferably contained in a proportion equal to or smaller than that of Ni in terms of the number of atoms.

Examples of the metal element other than Li and Ni include at least one selected from the group consisting of Co, Mn, Al, Cr, Fe, V, Mg, Ca, Na, Ti, Zr, Nb, Mo, W, Cu, Zn, Ga, In, Sn, La and Ce.

The positive electrode active material preferably contains the lithium-containing composite oxide (hereinafter also referred to as "NCM") represented by the following Formula (C1). When NCM is used as the positive electrode active material, an electrode with a high energy density per unit volume and excellent in thermal stability can be easily produced.

LiNiₐCo_{b}Mn_{c}O₂ ··· Formula (C1)

[wherein in Formula (C1), a, b and c are each independently greater than 0 and less than 1, and the total of a, b and c is 0.99 to 1.00.]

Specific examples of NCM include LiNi_{0.33}Co_{0.33}Mn_{0.33}O₂, LiNi_{0.5}Co_{0.3}Mn_{0.2}O₂, LiNi_{0.5}Co_{0.2}Mn_{0.3}O₂, LiNi_{0.6}Co_{0.2}Mn_{0.2}O₂, and LiNi_{0.3}Co_{0.1}Mn_{0.1}O₂.

The positive electrode active material may contain the lithium-containing composite oxide (hereinafter also referred to as "NCA") represented by the following Formula (C2).

LiₜNi_{(1-x-y)}CoₓAl_{y}O₂ · · · Formula (C2)

[wherein in Formula (C2), t is 0.95 or greater and 1.15 or less, x is 0 or greater and 0.3 or less, y is 0.01 or greater and 0.2 or less, and the total of x and y is less than 0.5.]

A specific example of NCA includes LiNi_{0.3}Co_{0.15}Al_{0.05}O₂.

The content of the positive electrode active material in the positive electrode mixture layer is, for example, 10 to 99.9% by mass, preferably 30 to 99.0% by mass, further preferably 50 to 99.0% by mass, and particularly preferably 70 to 99.0% by mass, relative to the total mass of the positive electrode mixture layer.

### [Conductive auxiliary agent]

The conductive auxiliary agent is not particularly limited as long as it is a material other than the aforementioned active material, and any known conductive auxiliary agent can be used.

The known conductive auxiliary agent is preferably a carbon material having electrical conductivity, such as graphite, carbon black, electrically conductive carbon fibers (for example, a carbon nanotube, a carbon nanofiber, and a carbon fiber), and a fullerene.

The conductive auxiliary agent may be used singly or two or more types thereof may be used.

A commercially available product of the carbon black may be used.

Examples of the commercially available carbon black include, for example, TOKABLACK #4300, #4400, #4500, and #5500 (furnace black, manufactured by Tokai Carbon Co., Ltd.), PRINTEX L (furnace black, manufactured by Degussa AG), Raven 7000, 5750, 5250, 5000ULTRAIII, 5000ULTRA, Conductex SC ULTRA, Conductex 975ULTRA, and PUER BLACK100, 115, 205 (furnace black, manufactured by Columbian Chemicals Co.), #2350, #2400B, #2600B, #30050B, #3030B, #3230B, #3350B, #3400B, and #5400B (furnace black, manufactured by Mitsubishi Chemical Corporation), MONARCH1400, 1300, 900, VulcanXC-72R, BlackPearls2000, LITX-50, and LITX-200 (furnace black, manufactured by Cabot Corporation), Ensaco250G, Ensaco260G, Ensaco350G, and Super-P (manufactured by TIMCAL Ltd.), Ketjen Black EC-300J and EC-600JD (manufactured by Akzo Nobel N. V.), Denka Black and Denka Black HS-100, FX-35 (acetylene black, manufactured by Denka Co., Ltd).

Examples of the graphite include artificial graphite and natural graphite (for example, flaky graphite, lumpy graphite, and earthy graphite).

In terms of, for example, further exhibiting an effect of the conductive auxiliary agent, the content of the conductive auxiliary agent in the positive electrode mixture layer is, for example, 1 to 10% by mass and preferably 1 to 5% by mass, relative to the total mass of the positive electrode mixture layer.

### [Positive electrode current collector]

The positive electrode current collector is not particularly limited, and any known positive electrode current collector can be used.

Examples of the material of the positive electrode current collector include metallic materials such as aluminum, an aluminum alloy, stainless steel, nickel, titanium, and tantalum; and carbon materials such as carbon cloth and carbon paper.

Among these materials, in terms of, for example, a balance between costs and high electrical conductivity, aluminum is preferable as a material for the positive electrode current collector. Herein, the "aluminum" refers to pure aluminum or an aluminum alloy.

The positive electrode current collector that is aluminum foil is preferable. A material of the aluminum foil is not particularly limited, and examples thereof include, for example, an A1085 material and A3003 material.

### [Additive]

The positive electrode (a positive electrode mixture layer when a positive electrode current collector and the positive electrode mixture layer are included in the positive electrode) may further include an additive in addition to the present binder, the conductive auxiliary agent, and the positive electrode active material.

Examples of the additive include a thickener, a surfactant, a dispersant, a wetting agent, an antifoaming agent, and resistance reducing agent.

Each of the additives may be used singly or two or more thereof may be used.

### <Negative electrode>

The negative electrode is preferably an electrode capable of intercalating and releasing lithium ions, and the negative electrode preferably includes the present binder and a negative electrode active material, and more preferably comprises a negative electrode current collector and a negative electrode mixture layer containing the present binder and a negative electrode active material. In this case, the negative electrode mixture layer is arranged on at least a portion of a surface of the negative electrode current collector.

From the viewpoint of achieving both physical properties of the negative electrode mixture layer (for example, the electrolytic solution permeability and peel strength) and battery performance, the content of the present binder in the negative electrode mixture layer is preferably 0.1 to 10% by mass and more preferably 0.1% by mass to 4% by mass, relative to the total mass of the negative electrode mixture layer.

The content of the present binder of 0.1% by mass or more, allows adhesiveness of the negative electrode mixture layer to a negative electrode current collector and bondability between the negative electrode active materials to be further improved. The content of the present binder that is the upper limit or less, allows the amount of the negative electrode active material in the negative electrode mixture layer to be increased, as a result of which using the negative electrode mixture layer enables to facilitate a battery with a large capacity to be obtained.

A thickness of the negative electrode mixture layer is not particularly limited, and may be the same thickness as that of a conventionally known negative electrode mixture layer, but is preferably 30 to 500 pm, more preferably 30 to 300 pm, and further preferably 30 to 150 µm.

### [Negative electrode active material]

The negative electrode active material is preferably a material capable of intercalating and releasing lithium ions, and examples thereof include at least one selected from the group consisting of metallic lithium, a lithium-containing alloy, a metal or alloy that can be alloyed with lithium, an oxide capable of doping and dedoping a lithium ion, a transition metal nitride capable of doping and dedoping a lithium ion, and a carbon material capable of doping and dedoping a lithium ion.

Among these, the carbon material capable of doping and dedoping a lithium ion is preferred.

The negative electrode active material may be used singly, or two or more types thereof may be used.

Examples of the carbon material include carbon black, activated carbon, graphite materials (for example, artificial graphite and natural graphite), and an amorphous carbon material.

A shape of the carbon material may be any shape such as a fibrous, spherical, potato-like, or flaky shape.

A size of the carbon material is not particularly limited, and is preferably 5 to 50 µm and more preferably 20 to 30 µm.

Examples of the amorphous carbon material include hard carbon, coke, a mesocarbon microbead (MCMB) fired at 1500°C or lower, and a mesophase pitch carbon fiber (MCF).

Examples of the graphite material include artificial graphite and natural graphite. Examples of the artificial graphite include graphitized MCMB and graphitized MCF.

The graphite material may also contain boron. The graphite material may also be such that it was coated with a metal such as gold, platinum, silver, copper, or tin or amorphous carbon, or may be a mixture of amorphous carbon and graphite.

### [Conductive auxiliary agent]

The negative electrode (a negative electrode mixture layer when a negative electrode current collector and the negative electrode mixture layer are included in the negative electrode) may further include a conductive auxiliary agent in addition to the present binder and the negative electrode active material.

The conductive auxiliary agent is not particularly limited as long as it is a material other than the active material, and any known conductive auxiliary agent can be used, and specific examples of the conductive auxiliary agent are the same as the conductive auxiliary agents included in the positive electrode as described above, and preferred examples thereof are also the same.

From the viewpoint that for example, an effect of the conductive auxiliary agent is more favorably exhibited, the amount of the conductive auxiliary agent included in the negative electrode mixture layer is, for example, 0 to 10% by mass, preferably 0 to 5% by mass, and further preferably 0 to 3% by mass, relative to the total mass of the negative electrode mixture layer.

### [Negative electrode current collector]

The negative electrode current collector is not particularly limited, and any known negative electrode current collector can be used.

Examples of the material of the negative electrode current collector include metallic materials such as copper, nickel, stainless steel, and nickel-plated steel.

Among these, copper is preferable as a material for the negative electrode current collector in terms of, for example, processability, and copper foil is preferable as the negative electrode current collector.

### [Additive]

The negative electrode (a negative electrode mixture layer when a negative electrode current collector and the negative electrode mixture layer are included in the negative electrode) may further include an additive in addition to the present binder, the conductive auxiliary agent, and the negative electrode active material.

Examples of the additive include a thickener, a surfactant, a dispersant, a wetting agent, an antifoaming agent, and a resistance reducing agent.

Each of the additives may be used singly or two or more thereof may be used.

### <<Production method of electrode>>

From the viewpoint of improving a charge/discharge capacity of a battery to be obtained, it is preferable that at least one of the positive electrode and the negative electrode is an electrode obtained by a dry method, and that the electrode is produced by the method for producing an electrode including the following steps 1 and 2.

Specifically, the electrode obtained by the dry method is preferably an electrode obtained by a method for producing an electrode, including
a step 1 of dry mixing the present binder and the active material to obtain an electrode composite material; and
a step 2 of producing an electrode including the electrode composite material and a current collector.

### <Step 1>

The step 1 is a step of dry mixing the present binder and the active material without using a solvent.

In the step 1, the conductive auxiliary agent and/or the additive may be further used.

In the step 1, each raw material component is preferably dry mixed in an amount such that the content of each component in an electrode composite material to be obtained is in the same range as the content of each component in the electrode mixture layer.

When the conductive auxiliary agent and/or the additive are used, the order in which the present binder, the active material, and the conductive auxiliary agent and/or the additive are mixed, is not particularly limited, and the present binder and the active material may be mixed and then the conductive auxiliary agent and/or the additive may be further mixed, or the present binder, the active material, and the conductive auxiliary agent and/or the additive may be simultaneously added and mixed.

The dry mixing method is not particularly limited, and examples thereof include various known methods, for example, a method of mixing using, for example, a defoaming kneader, a dry ball mill, a dry bead mill, a blade planetary motion type mixer, a rotary type planetary motion mixer, a mortar machine, a mortar, a homogenizer, and a low frequency resonant acoustic mixer, a Jet mill, a tumbler mixer, a milcer, and a Henschel mixer.

Upon dry mixing, heat treatment may also be performed, for example, in order to soften the present binder. The heat treatment is preferably performed at a temperature at which the active material, for example, does not decompose, or lower.

### <Step 2>

The step 2 is a step of producing an electrode including the electrode composite material and a current collector, and specific examples of the step 2 include a step of applying pressure to the electrode composite material to mold it and bonding the obtained electrode composite material to a current collector to produce an electrode, or a step of simultaneously applying pressure to the electrode composite material and a current collector to mold them and bonding the obtained electrode composite material to the current collector then to produce an electrode.

A preferable example of the method for applying pressure to the electrode composite material to mold it includes press molding.

The bonding method is preferably a method for pressing the electrode composite material onto the current collector.

After the electrode composite material was molded or after the electrode composite material was pressed onto the current collector, the electrode composite material may be further heated and dried.

As the press method upon the press molding or upon pressing the electrode composite material onto the current collector, various known press methods such as a roll press method and a flat plate press method can be appropriately employed.

The pressure upon the press is preferably 0.1 ton to 100 ton and more preferably 1 ton to 50 ton. A press time is not particularly limited, but is, for example, 0.5 seconds to 1 hour.

The press density of the electrode when the electrode composite material was compressed at the pressure in the above range is preferably 1.0 to 4.0 g/cm³.

The press density of the positive electrode is more preferably 2.5 to 4.0 g/cm³.

The press density of the negative electrode is more preferably 1.0 to 2.0 g/cm³ and further preferably 1.3 to 1.8 g/cm³.

A temperature upon the press is preferably 20 to 300°C, more preferably 80 to 200°C, and further preferably 100 to 200°C.

Molding the electrode composite material and bonding the electrode composite material and the current collector in this temperature range, allows the binder to moderately soften, and effectively enables bonding between the binder and the active material, and bonding between the electrode composite material and the current collector.

Examples of the method of heating and drying include drying with warm air, hot air, or low humidity air; vacuum drying; and drying with infrared rays (for example, far infrared rays) irradiation.

A drying time and drying temperature are not particularly limited, but the drying time is, for example, 1 minute to 24 hours, and the drying temperature is, for example, 80 to 180°C. The heating and drying may be carried out, if necessary, however, in terms of, for example, simplification of electrode manufacture, economy, safety, and environmental burden, the heating and drying are preferably omitted.

Note, however, in order to improve adhesiveness with the electrode composite material, the current collector to be used may be preliminarily subjected to surface treatment such as roughening treatment or formation of electrically conductive adhesive layer.

The method for producing an electrode may further include other step in addition to the step 1 and step 2. Examples of the other step include, for example, a step of preparing the present binder.

### <<Lithium ion secondary battery>>

The lithium ion secondary battery according to one embodiment of the present invention preferably includes the electrode and an electrolyte. The lithium ion secondary battery may have a separator between a negative electrode and a positive electrode, and may have a case housing the electrode and electrolyte, for example.

Because the lithium ion secondary battery includes the electrode including the present binder, it is excellent in a charge/discharge capacity of the battery.

### <Electrode>

In terms of, for example, being capable of facilitating a battery excellent in battery characteristics to be obtained, the lithium ion secondary battery preferably has at least either of electrodes of a positive electrode and a negative electrode, which is an electrode produced by a dry method, particularly an electrode produced by the method described in the column of the production method of the electrode described above. Either of the positive electrode and the negative electrode of the lithium ion secondary battery may be an electrode produced, for example, by a wet method.

### <Electrolyte>

The lithium ion secondary battery preferably includes an electrolyte. The electrolyte is not particularly limited as long as it can serve as an electrical conductor for an alkali metal cation such as a lithium ion. The properties of the electrolyte are not also particularly limited, and for example, the electrolyte may be liquid in which it is dissolved in the nonaqueous solvent described below, and may be gel-like, or a solid state.

The electrolyte may be used singly, or two or more types thereof may be used.

The electrolyte preferably contains at least one lithium salt containing fluorine (hereinafter also referred to as "fluorine-containing lithium salt").

Examples of the fluorine-containing lithium salt include inorganic acid anion salts such as lithium hexafluorophosphate (LiPF₆), lithium tetrafluoroborate(LiBF₄), lithium hexafluoroarsenate (LiAsF₆), and lithium hexafluorotantalate (LiTaF₆); and organic acid anion salts such as lithium trifluoromethanesulfonate (LiCF₃SO₃), lithium bis(trifluoromethanesulfonyl)imide (Li(CF₃SO₂)₂N), and lithium bis(pentafluoroethanesulfonyl)imide (Li(C₂F₅SO₂)₂N). Among these, as the fluorine-containing lithium salt, LiPF₆ is particularly preferred.

The lithium ion secondary battery may contain an electrolyte that is a lithium salt free of fluorine. Examples of the lithium salt free of fluorine include lithium perchlorate (LiClO₄), lithium aluminum tetrachloride (LiAlCl₄), and lithium decachlorodecaborate (Li₂B₁₀Cl₁₀).

### [Electrolytic solution]

The lithium ion secondary battery may contain an electrolytic solution in which one or more types of the electrolytes are dissolved in one or more types of solvents.

The electrolytic solution is more preferably a nonaqueous electrolytic solution containing one or more types of the electrolytes and one or more types of nonaqueous solvents.

In addition to the electrolyte and the electrolytic solution, the electrolytic solution may contain conventionally known additives used for improving, for example, battery performance.

A proportion of a fluorine-containing lithium salt is preferably 50 to 100% by mass, more preferably 60 to 100% by mass, and further preferably 80 to 100% by mass, relative to 100% by mass of electrolyte in an electrolytic solution.

A proportion of LiPF₆ is also preferably 50 to 100% by mass, more preferably 60 to 100% by mass, and further preferably 80 to 100% by mass, relative to 100% by mass of electrolyte in an electrolytic solution.

A concentration of electrolyte in an electrolytic solution is preferably 0.1 to 3 mol/L and more preferably 0.5 to 2 mol/L.

A concentration of LiPF₆ in an electrolytic solution is also preferably 0.1 to 3 mol/L and more preferably 0.5 to 2 mol/L.

The electrolytic solution preferably contains at least one type of nonaqueous solvent.

Examples of the nonaqueous solvent include cyclic carbonates, fluorine-containing cyclic carbonates, chain carbonates, fluorine-containing chain carbonates, aliphatic carboxylic acid esters, fluorine-containing aliphatic carboxylic acid esters, γ-lactones, fluorine-containing γ-lactones, cyclic ethers, fluorine-containing cyclic ethers, chain ethers, fluorine-containing chain ethers, nitriles, amides, lactams, nitromethane, nitroethane, sulfolane, trimethyl phosphate, dimethyl sulfoxide, and dimethyl sulfoxide-phosphoric acid.

Examples of the cyclic carbonates include ethylene carbonate (EC), propylene carbonate (PC), and butylene carbonate (BC).

Examples of the fluorine-containing cyclic carbonates include fluoroethylene carbonate (FEC).

Examples of the chain carbonates include dimethyl carbonate (DMC), diethyl carbonate (DEC), ethylmethyl carbonate (EMC), methylpropyl carbonate (MPC), ethylpropyl carbonate (EPC), and dipropyl carbonate (DPC).

Examples of the fluorine-containing chain carbonates include methyl 2,2,2-trifluoroethyl carbonate.

Examples of the aliphatic carboxylic acid esters include methyl formate, methyl acetate, methyl propionate, methyl butyrate, methyl isobutyrate, methyl trimethylbutyrate, ethyl formate, ethyl acetate, ethyl propionate, ethyl butyrate, ethyl isobutyrate, and trimethyl ethylbutyrate.

Examples of the γ-lactones include γ-butyrolactone and γ-valerolactone.

Examples of the cyclic ethers include tetrahydrofuran, 2-methyltetrahydrofuran, tetrahydropyran, 1,3-dioxolane, 4-methyl-1,3-dioxolane, 1,3-dioxane, and 1,4-dioxane.

Examples of the chain ethers include 1,2-ethoxyethane (DEE), ethoxymethoxyethane (EME), diethyl ether, 1,2-dimethoxyethane, and 1,2-dibutoxyethane.

Examples of the nitriles include acetonitrile, glutaronitrile, adiponitrile, methoxyacetonitrile, and 3-methoxypropionitrile.

Examples of the amides include N,N-dimethylformamide.

Examples of the lactams include N-methylpyrrolidinone, N-methyloxazolidinone, and N,N'-dimethylimidazolidinone.

The nonaqueous solvent preferably contains at least one selected from the group consisting of cyclic carbonates, fluorine-containing cyclic carbonates, chain carbonates, and fluorine-containing chain carbonates.

In this case, the total proportion of the cyclic carbonates, fluorine-containing cyclic carbonates, chain carbonates, and fluorine-containing chain carbonates in the nonaqueous solvent is preferably 50 to 100% by mass, more preferably 60 to 100% by mass and further preferably 80 to 100% by mass.

The nonaqueous solvent preferably contains at least one selected from the group consisting of cyclic carbonates and chain carbonates.

In this case, the total proportion of cyclic carbonates and chain carbonates in the nonaqueous solvent is preferably 50 to 100% by mass, more preferably 60 to 100% by mass, and further preferably 80 to 100% by mass.

A proportion of the nonaqueous solvent in the nonaqueous electrolytic solution is preferably 60% by mass or more and more preferably 70% by mass or more.

The upper limit of the proportion of the nonaqueous solvent in the nonaqueous electrolytic solution depends on the content of other component as well, but is, for example, 99% by mass, preferably 97% by mass and further preferably 90% by mass.

From the viewpoint of further improving the dissociation properties of the electrolyte and mobility of ions, the intrinsic viscosity of the nonaqueous solvent is preferably 10.0 mPa · s or less at 25°C.

### <Separator>

The separator is not particularly limited as long as it can electrically insulate a positive electrode and a negative electrode and can permeate lithium ions.

Examples of a material of the separator include resins such as a polyethylene (PE), polypropylene (PP), polyester, cellulose, and polyamide. Examples of the separator include a porous flat plate including the resin and nonwoven fabric including the resin.

Among these, as a separator, a porous resin film having a single layer or multilayer structure mainly composed of one or more types of polyolefin resins is preferable.

A thickness of the separator is, for example, 5 to 30 µm.

### <Case>

The case is not particularly limited, and examples thereof include known cases for lithium ion secondary batteries, and specific examples thereof include a case including a laminate film, and a case including a battery can and a battery can lid.

### <Production method of lithium ion secondary battery>

Examples of the method for producing a lithium ion secondary battery include known methods for producing lithium ion secondary batteries, and examples thereof include a production method including a precursor fabrication step of housing a positive electrode, a negative electrode, an electrolyte (or electrolytic solution), and a separator, if necessary in a case to fabricate a lithium ion secondary battery precursor and an aging step of subjecting the lithium ion secondary battery precursor to aging treatment to obtain a lithium ion secondary battery.

The case, positive electrode, negative electrode, electrolyte, separator, and electrolytic solution in the method for producing a lithium ion secondary battery are the same as the case, positive electrode, negative electrode, electrolyte, separator, and electrolytic solution in the lithium ion secondary battery described above, and preferred aspects thereof are also the same.

The precursor fabrication step preferably includes a step of housing a positive electrode and a negative electrode (via a separator, if necessary) in a case, and a step of injecting an electrolyte (or electrolytic solution) into a case in which the positive electrode and the negative electrode (the separator, if necessary) are housed.

In the aging step, the lithium ion secondary battery precursor is preferably subjected to combination of charge and discharge once or more times in an environment of 25 to 70°C.

Such an aging step included tends to be able to reduce internal resistance reduction (particularly positive electrode resistance reduction) of a lithium ion secondary battery.

### Examples

One embodiment of the present invention will be described below based on Examples, but the present invention is in no way limited to these Examples.

Methods for measuring various physical properties are as follows.

### <Intrinsic viscosity [η]>

The intrinsic viscosity [η] is determined by dissolving the particles in decalin and measuring the viscosity in decalin at a temperature of 135°C.

### <Average particle diameter d50>

The average particle diameter d50 was determined by measuring a mass-based particle size distribution by a Coulter counter method using a precision particle size analyzer (product name: Multisizer Three, manufactured by Beckman Coulter, Inc.), and a particle size at which the cumulative mass is 50% was defined as the average particle diameter (d50) in the mass-based particle size distribution.

### <Passage rate through mesh sieve with opening of 45 um>

The passage rate through a mesh sieve with an opening of 45 µm (proportion of particles passing through a mesh sieve with an opening of 45 µm) was determined by measuring the mass of particles passing through a mesh sieve with an opening of 45 µm (JIS Z8801-1 (2019)).

### <Electrode binder 1 (used in Example 1, Example 4 and Example 6)>

As the electrode binder, an ultrahigh molecular weight ethylenic polymer fine particle (MIPELON (registered trademark) PM-200, manufactured by Mitsui Chemicals, Inc., intrinsic viscosity [η] = 13.0 dl/g, MFR (190°C, 21.6 kg load) = 0.020 g/10 minutes, average particle diameter d50 = 10.5 µm, passage rate through a mesh sieve with an opening of 45 µm = 100% by mass), was used.

### <Electrode binder 2 (used in Example 2 and Example 5)>

As the electrode binder, an ultrahigh molecular weight ethylenic polymer fine particle (MIPELON (registered trademark) XM-220, manufactured by Mitsui Chemicals, Inc., intrinsic viscosity [η] = 14.5 dl/g, MFR (190°C, 21.6 kg load) = 0.015 g/10 minutes, average particle diameter d50 = 32 pm, passage rate through a mesh sieve with an opening of 45 µm = 90% by mass), was used.

### <Electrode binder 3 (used in Example 3)>

As the electrode binder used in Example 3, an ultrahigh molecular weight ethylenic polymer fine particle was fabricated by the following method.

### (i) Preparation of magnesium-containing support component (α-1)

To 95.2 g (1.0 mol) of anhydrous magnesium chloride and 390.6 g (3.0 mol) of 2-ethylhexyl alcohol was added decane to make a total volume of 1,000 mL, and reaction was carried out at 130°C for 2 hours to obtain a homogeneous solution.

Next, a flask with an internal volume of 1,000 mL, which had been fully substituted with nitrogen was charged with 100 mL of the homogeneous solution (100 mmol in terms of the number of magnesium atoms), 50 mL of purified decane, and 560 mL of chlorobenzene, and using Clearmix CLM-0.8S manufactured by M Technique Co., Ltd, the flask was charged dropwisely with 110 mmol of triethylaluminum diluted with purified decane over 30 minutes while the liquid temperature was kept at 0°C under stirring at a rotational speed of 15,000 rpm. Thereafter, the liquid temperature was raised to 80°C over 4 hours and reaction was carried out for 1 hour. Next, the flask was again charged dropwisely with 202 mmol of triethylaluminum diluted with purified decane over 30 minutes while the liquid temperature was kept at 80°C and reaction was further carried out under heating for 1 hour. After completion of the reaction, the solid portion was collected by filtration, fully washed with toluene, and 100 mL of toluene was added thereto to prepare a toluene slurry of the magnesium-containing support component (α-1).

### (ii) Preparation of solid catalyst component (β-1)

A flask with an internal volume of 1,000 mL, which had been fully substituted with nitrogen was charged with 20 mmol of the toluene slurry of the magnesium-containing support component (α-1) in terms of the number of magnesium atoms and 600 mL of purified toluene and charged dropwisely with 38.9 mL of a toluene solution (0.0001 mmol/mL) of the transition metal compound represented by the following Formula (I) over 20 minutes while the temperature was kept at room temperature under stirring.

After stirring for 1 hour, the solid portion was collected by filtration, fully washed with toluene, and purified decane was added thereto to prepare a 200 mL decane slurry of the solid catalyst component (β-1).

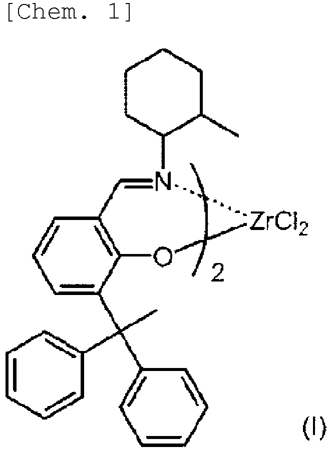

### (iii) Preparation of ultrahigh molecular weight ethylenic polymer fine particle

A SUS autoclave with an internal volume of 1 L fully substituted with nitrogen was charged with 500 mL of purified heptane, and distributed with ethylene at 100 L/hr for 15 minutes at room temperature to saturate the liquid phase and gas phase. Subsequently, the autoclave was raised to 65°C, and 1.25 mL of a decane solution of triethylaluminum (1.0 mmol/mL in terms of aluminum atom) and 200 mL of the decane slurry of the solid catalyst component (β-1), which was 0.00008 mmol in terms of zirconium atom, were added while distributing ethylene at 12 L/hr, followed by stirring for 3 minutes while keeping the same temperature, and then 40 mg of EMULGEN 108 (manufactured by Kao Corporation) was added and immediately thereafter raising of ethylene pressure was started. The ethylene pressure was increased to 0.8 MPa · G over 10 minutes, and polymerization was carried out at 70°C for 2 hours while ethylene was supplied so that its pressure was maintained. The autoclave was then cooled and the ethylene was depressurized. The resulting polymer slurry was filtered, washed with hexane, and dried under reduced pressure at 80°C for 10 hours to obtain 40.9 g of an ultrahigh molecular weight ethylenic polymer fine particle.

The obtained ultrahigh molecular weight ethylenic polymer fine particle had an intrinsic viscosity [η] of 23.0 dl/g, an average particle diameter d50 of 10.7 µm, and a passage rate through a mesh sieve with an opening of 45 pm of 99% by mass.

### <Electrode binder 4 (used in Comparative Example 1)>

A high density polyethylene (HDPE) (with an intrinsic viscosity [η] = 1.3 dl/g, an average particle diameter d50 = 25 µm, and a passage rate through a mesh sieve with an opening of 45 pm = 92% by mass) was used.

### <Electrode binder 5 (used in Comparative Example 2)>

An ultrahigh molecular weight polyethylene (PE) with an intrinsic viscosity [η] = 14.0 dl/g and an average particle diameter d50 = 110 pm was used.

### <Fabrication of electrode by dry mixing>

### -Positive electrode fabrication (Examples 1 to 3 and Comparative Examples 1 and 2)-

920 g of NCM523 (composition formula LiNi_{0.5}Co_{0.2}Mn_{0.3}O₂, manufactured by Umicore S. A.) as a positive electrode active material, 20 g of Super-P (electrically conductive carbon black, a BET specific surface area: 62 m²/g, manufactured by TIMCAL Ltd.) as a conductive auxiliary agent, and 20 g of KS-6 (flaky graphite, manufactured by TIMREX Inc.) and 12 g of either each of electrode binders 1 to 3 or electrode binders 4 or 5, were dry mixed by using a defoaming kneader (non-bubbling kneader NBK-1, manufactured by NIHONSEIKI KAISHA LTD.) at a rotation speed of 95 rpm to fabricate a positive electrode composite material (electrode composite material).

The obtained positive electrode composite material was evenly scattered and arranged on both surfaces of the main surface of aluminum foil (thickness of 20 pm and width of 80 mm) as a current collector, and the gap between the upper and lower rolls was adjusted, and using a 1 ton roll press machine, a positive electrode to be obtained was pressed so that the press density of each side of the positive electrode to be obtained was 3.1 ± 0.1 g/cm³. Next, the obtained aluminum foil was dried and baked in a vacuum drying oven at 150°C for 1 hour.

Regarding the dried double-sided coated aluminum foil obtained above, the electrode was slit so as to form a coated portion (front surface: 56 mm × 334 mm, back surface: 56 mm × 408 mm) and a margin for tab welding, thereby obtaining a positive electrode.

### - Negative electrode fabrication (Examples 4 and 5) -

960 g of natural graphite as a negative electrode active material, 10 g of Super-P (electrically conductive carbon black) as a conductive auxiliary agent, and 22.5 g of either of the electrode binder 1 or 2, were dry mixed by using a defoaming kneader (non-bubbling kneader NBK-1, manufactured by NIHONSEIKI KAISHA LTD.) at a rotation speed of 95 rpm to fabricate a negative electrode composite material.

The obtained negative electrode composite material was evenly scattered and arranged on both surfaces of the main surface of copper foil as a current collector, and the gap between the upper and lower rolls was adjusted, and using a 1 ton roll press machine, a negative electrode to be obtained was pressed so that the press density on each side of the negative electrode to be obtained was 1.45 ± 0.05 g/cm³. Next, it was dried and baked in a vacuum drying oven at 150°C for 1 hour.

Regarding the dried double-sided coated copper foil obtained above, the electrode was slit so as to form a coated portion (front surface: 56 mm × 334 mm, back surface: 56 mm × 408 mm) and a margin for tab welding, thereby obtaining a negative electrode.

### <Fabrication of electrode by wet mixing>

### -Positive electrode fabrication (Examples 4 and 5)-

### 1. Slurry preparation

920 g of NCM523 (composition formula LiNi_{0.5}Co_{0.2}Mn_{0.3}O₂, manufactured by Umicore S. A.) as a positive electrode active material, 20 g of Super-P (electrically conductive carbon black) as a conductive auxiliary agent, and 20 g of KS-6 (flaky graphite), were mixed by using a 5 L planetary disperser for 10 minutes, and 100 g of N-methylpyrrolidone (NMP) was added, followed by mixing for an additional 20 minutes.

Next, 150 g of 8% by mass polyvinylidene fluoride (PVDF) solution (such that PVDF W#7200 manufactured by KUREHA CORPORATION, was dissolved in NMP., which was hereinafter also referred to as a "8%-PVDF solution.") was added, followed by kneading for 30 minutes, and then 150 g of 8%-PVDF solution was further added, followed by kneading for 30 minutes. Thereafter, 200 g of 8%-PVDF solution was added and kneaded for 30 minutes. Next, 80 g of 8%-PVDF solution was added and kneaded for 30 minutes. Thereafter, 27 g of NMP was added in order to adjust the viscosity and mixed for 30 minutes, followed by vacuum degassing for 30 minutes to prepare a slurry with a solid content concentration of 60% by mass.

### 2. Coating and drying

The slurry was applied onto one main surface of aluminum foil (thickness: 20 pm and width: 200 mm) by using a die coater and dried so that the coating mass after drying was 19.0 mg/cm². Next, the slurry was similarly applied onto the surface opposite to the main surface (uncoated surface) of the aluminum foil by using a die coater and dried so that the coating mass was 19.0 mg/cm².

The obtained double-sided coated aluminum foil (the total coating mass on both sides was 38.0 mg/cm²) was dried in a vacuum drying oven at 130°C for 12 hours.

### 3. Press

Using a 1-ton roll press machine, the gap between the upper and lower rolls was adjusted, and the dried double-sided coated aluminum foil obtained above was pressed so that the press density of one surface thereof was 2.9 ± 0.05 g/cm³.

### 4. Slit

Regarding the pressed double-sided coated aluminum foil described above, the electrode was slit so as to form a coated portion (front surface: 56 mm × 334 mm, back surface: 56 mm × 408 mm) and a margin for tab welding, thereby obtaining a positive electrode.

### - Negative electrode fabrication (Examples 1 to 3 and Comparative Examples 1 and 2) -

### 1. Slurry preparation

960 g of natural graphite as a negative electrode active material and 10 g of Super-P (electrically conductive carbon black) as a conductive auxiliary agent were mixed for 5 minutes by using a 5 L planetary disperser, and then 450 g of 1% by mass carboxymethyl cellulose (CMC) (such that CMC was dissolved in pure water., which was hereinafter also referred to as a "1%-CMC aqueous solution") was added, followed by mixing for an additional 30 minutes. Next, 300 g of 1%-CMC aqueous solution was added and kneaded for 30 minutes, and 250 g of 1%-CMC was further added and kneaded for 30 minutes. Thereafter, 25 g of styrene-butadiene rubber (SBR) (40% by mass emulsifying solvent) to be a binder was added and mixed for 30 minutes, followed by vacuum degassing for 30 minutes to prepare a slurry with a solid content concentration of 45% by mass.

### 2. Coating and drying

The slurry was applied onto one main surface of copper foil as a current collector (thickness: 10 pm) by using a die coater and dried so that the coating mass after drying was 11.0 mg/cm². Next, the slurry was similarly applied onto the surface opposite to the main surface (uncoated surface) of the copper foil by using a die coater and dried so that the coating mass was 11.0 mg/cm².

The obtained double-sided coated copper foil (the total coating mass on both sides was 22.0 mg/cm²) was dried in a vacuum drying oven at 120°C for 12 hours.

### 3. Press

Using a 1-ton roll press machine, the gap between the upper and lower rolls was adjusted, and the dried double-sided coated copper foil obtained above was pressed so that the press density of one surface thereof was 1.45 ± 0.05 g/cm³.

### 4. Slit

Regarding the pressed double-sided coated copper foil described above, the electrode was slit so as to form a coated portion (front surface: 58 mm × 372 mm, back surface: 58 mm × 431 mm) and a margin for tab welding, thereby obtaining a negative electrode.

### <Battery fabrication>

Using each of the electrodes fabricated above, a battery was fabricated according to the following procedure.

First, an aluminum tab was bonded to the margin portion for tab welding of the positive electrode using an ultrasonic bonding machine. A nickel tab was bonded to the margin portion for tab welding of the negative electrode using an ultrasonic bonding machine.

As a separator, a polyethylene porous membrane (183 mm × 100 mm) with porosity of 45% and a thickness of 25 pm was used.

### 1. Stacking

The negative electrode, separator, positive electrode, separator, and negative electrode were alternately stacked in this order so that a laminate including the total of 5 layers of the positive electrode and 6 layers of the negative electrode was obtained. In this case, the positive electrode tab and negative electrode tab were stacked so that they were on the same side.

Next, the obtained laminate was sandwiched between laminate sheets, and three sides of the laminate sheets were heat-sealed to fabricate an electrode-housing case. In this case, the three sides other than the tab sides were heat-sealed so that the tabs of the positive electrode and negative electrode protruded from the laminate sheet.

### 2. Electrolytic solution injection

Before injecting the electrolytic solution, the electrode-housing case was dried under reduced pressure at 70°C for 12 hours in a vacuum dryer. Next, to the electrode-housing case after drying was injected 19.6 ± 0.3 g of electrolytic solution (1 mol/L-LiPF₆, solvent: ethylene carbonate (EC)/diethyl carbonate (DEC) = 3/7 (volume ratio), containing vinylene carbonate (VC) as an additive so that its concentration was 1.0% by mass relative to the mass of electrolytic solution to be finally obtained), and then the remaining sides of the electrode-housing case was heat-sealed while being vacuumed so that the tabs of the positive electrode and negative electrode protruded from the laminate sheet.

### 3. Activation (aging) treatment

The electrode-housing case with all the four sides sealed was charged at 2.5 to 4.2 V at room temperature, held for 0.5 to 12 hours, charged to 4.2 V, and discharged down to 2.8 V in this order several times, and then stored at 25°C for 5 days in a fully charged state of 4.2 V (SOC 100%) to fabricate a battery (stacked battery [designed capacity 5 Ah]).

### <Measurement of charge capacity and discharge capacity>

The fabricated battery (after activation treatment) was charged to a constant voltage of 4.2 V at room temperature, and the charge capacity was measured. Next, the battery was discharged down to 2.8 V at a constant current of 0.1 C at room temperature, and the discharge capacity was measured. The results are shown in Table 1.

**[Table 1]**

| | | | Example 1 | Example 2 | Example 3 | Example 4 | Example 5 | Comparative Example 1 | Comparative Example 2 |
|---|---|---|---|---|---|---|---|---|---|
| Positive electrode | Electrode fabrication method | - | Dry method | Dry method | Dry method | Wet method | Wet method | Dry method | Dry method |
| | Binder | - | Binder 1 | Binder2 | Binder 3 | PVDF | PVDF | Binder 4 | Binder 5 |
| | Intrinsic viscosity [η] | dl/g | 13.0 | 14.5 | 23.0 | - | - | 1.3 | 14.0 |
| | Average particle diameter | µm | 10.5 | 32 | 10.7 | - | - | 25 | 110 |
| Negative electrode | Electrode fabrication method | - | Wet method | Wet method | Wet method | Dry method | Dry method | Wet method | Wet method |
| | Binder | - | SBR | SBR | SBR | Binder 1 | Binder 2 | SBR | SBR |
| | Intrinsic viscosity [η] | dl/g | - | - | - | 13.0 | 14.5 | - | - |
| | Average particle diameter | µm | - | - | - | 10.5 | 32 | - | - |
| Battery evaluation | Charge capacity | mAh/g | 182 | 177 | 180 | 181 | 174 | 22 | 58 |
| | Discharge capacity | mAh/g | 171 | 160 | 169 | 172 | 164 | 12 | 26 |

In Table 1, the intrinsic viscosity [η] and average particle size refer to the intrinsic viscosity [η] and the average particle diameter d50 of the electrode binder used in the dry method. In Table 1, "-" means that there is no measured value for the corresponding item.

By using the present binders, the electrodes can be fabricated by the dry method, and the (lithium ion secondary) batteries of Examples 1 to 5 are found to have the improved charge/discharge capacity of the battery, compared to the (lithium ion secondary) batteries of Comparative Examples 1 and 2.

### <Electrode binder 6 (used in Examples 7 to 9)>

As the electrode binders used in Examples 7 to 9, ultrahigh molecular weight ethylenic polymer fine particles were fabricated by the following method.

### (i) Preparation of magnesium-containing support component (α-2)

A 2L glass flask with a stirrer, fully substituted with nitrogen was charged with 95.2 g (1.0 mol) of anhydrous magnesium chloride, 442 mL of dehydrated decane, 260.4 g (2.0 mol) of 2-ethylhexyl alcohol, and 298.5 g (1.0 mol) of 2-octyldodecyl alcohol to carry out reaction at 155°C for 4 hours, giving a homogeneous transparent solution.

Next, another 1L glass flask with a stirrer, fully substituted with nitrogen was charged with 100 mmol of the homogeneous solution in terms of magnesium atom and 610 mL of dehydrated decane, and charged slowly in dropwise manner with 109 mmol of triethylaluminum while the liquid temperature was kept at 0°C under vigorous stirring at a rotational speed of 18,000 rpm by using a homogenizer (Clearmix CLM-1.5S manufactured by M Technique Co., Ltd). Thereafter, the liquid temperature was raised to 80°C over 4 hours, and the flask was again charged slowly in dropwise manner with 188 mmol of triethylaluminum while the liquid temperature was kept at 80°C then to further react for 1 hour. After completion of the reaction, the solid portion was collected by filtration, fully washed with dehydrated xylene, and 200 mL of dehydrated xylene was added thereto to prepare a xylene slurry of the magnesium-containing support component (α-2). The magnesium concentration of the prepared magnesium-containing support component (α-2) was 0.21 mmol/mL, and the aluminum concentration was 0.022 mmol/mL.

### (ii) Preparation of solid catalyst component (β-2)

A 200 mL glass reactor fully substituted with nitrogen was charged with 56.1 mL of xylene and then charged with 28.9 mL of the above prepared xylene slurry of the magnesium-containing support component (α-2) (5.95 mmol in terms of magnesium atom) under stirring. Next, the reactor was charged with 28.3 mg (0.0329 mmol in terms of zirconium atom) of the transition metal compound represented by the following Formula (II) to carry out reaction at room temperature for 1 hour. Thereafter, the reaction product was filtrated, the obtained cake was washed once with 50 mL of xylene and washed twice with 50 mL of decane. Next, after filtration, 105 mL of decane was added to the obtained cake to prepare a decane slurry of the solid catalyst component (β-2).

When a portion of the obtained decane slurry of the solid catalyst component (β-2) was collected to determine its concentration, the zirconium concentration was 0.000373 mmol/mL, and the magnesium concentration was 0.0699 mmol/mL.

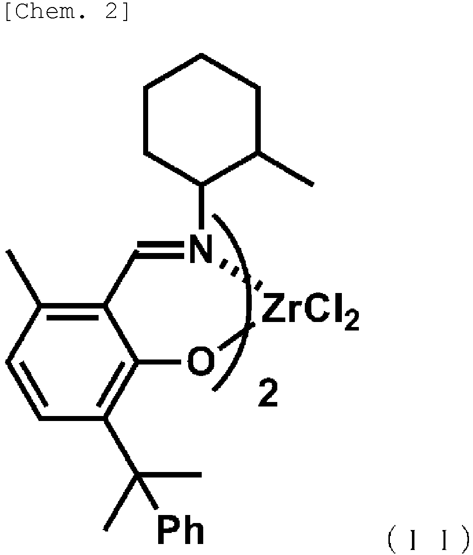

### (iii) Preparation of ultrahigh molecular weight ethylenic polymer fine particle

A SUS autoclave with an internal volume of 1 L fully substituted with nitrogen was charged with 500 mL of decane, and distributed with ethylene at 0.4 NL/min for 15 minutes at room temperature to saturate the liquid phase and gas phase. Subsequently, the autoclave was raised to 65°C, and 1.25 mL of a decane solution of triisobutylaluminum (1.0 mmol/mL in terms of aluminum atom) and 11.4 mL of a decane slurry of the above solid catalyst component (β-2) (0.80 mmol in terms of magnesium atom) were added while distributing ethylene at 0.4 NL/min, followed by stirring for 5 minutes while keeping the same temperature. Thereafter, the autoclave was charged with 6 mL (15 mg/mL) of decane solution of EMULGEN 108 (manufactured by Kao Corporation), distribution of ethylene was once stopped, the autoclave was charged with 1 mL of hydrogen, and then raised to the temperature of 70°C. Thereafter, the autoclave was charged with ethylene at a rate of 1.0 NL/min until the pressure reached 0.35 MPaG, and after the pressure reached 0.35 MPaG, polymerization was carried out until the amount of ethylene fed reached 56 NL while the internal temperature and pressure were maintained. The autoclave was then cooled and the ethylene was depressurized. The resulting slurry including the white solid was filtered, the cake was washed with heptane, and dried under reduced pressure at 80°C for 10 hours to obtain 68.6 g of an ultrahigh molecular weight ethylenic polymer fine particle.

The obtained ultrahigh molecular weight ethylenic polymer fine particle had an intrinsic viscosity [η] of 11.9 dl/g, an average particle diameter d50 of 6.2 µm, and a passage rate through a mesh sieve with an opening of 45 pm of 100% by mass.

### <Electrode binder 7 (used in Example 10)>

As the electrode binder used in Example 10, an ultrahigh molecular weight ethylenic polymer fine particle was fabricated by the following method.

The magnesium-containing support component (α-2) and solid catalyst component (β-2) were prepared by the same method as that for the electrode binder 6.

69.8 g of ultrahigh molecular weight ethylenic polymer fine particles was obtained by the same method as that for the electrode binder 6 except that in the preparation step of the ultrahigh molecular weight ethylenic polymer fine particle of the electrode binder 6, after the solution of EMULGEN 108 was charged, the distribution of ethylene was not stopped and 1 mL of hydrogen was not charged.

The obtained ultrahigh molecular weight ethylenic polymer fine particle had an intrinsic viscosity [η] of 24.6 dl/g, an average particle diameter d50 of 6.4 µm, and a passage rate through a mesh sieve with an opening of 45 pm of 100% by mass.

### [Example 6]

48 g of natural graphite as a negative electrode active material and 2.0 g of electrode binder 1 were dry mixed at a rotation speed of 20,000 rpm by using Labo MILLSER (IFM-800 LM-PLUS, manufactured by Iwatani Corporation) to fabricate a negative electrode composite material.

The negative electrode composite material obtained above was charged into the gap between two rolls of a calendar roll molding machine set at 200°C, and the gap between the rolls was adjusted to 1.45 ± 0.05 g/cm³ to obtain a negative electrode mixture layer with a thickness of 135 pm.

### <Tensile strength of negative electrode mixture layer>

A test piece was fabricated by cutting the obtained negative electrode mixture layer so that the width in the rolling direction of the roll was 5 mm. Using the test piece fabricated and a tensile tester (universal tester Model 5982, manufactured by Instron Corporation), the tensile strength (at break) of the test piece in the rolling direction was measured under the conditions of temperature: 23°C, distance between chucks: 10 mm, and tensile rate: 1 mm/min.

### <Permeability of electrolytic solution>

The obtained negative electrode mixture layer was punched out to a diameter of 17 mm and adhered onto a smooth glass surface that was levelled, so that the negative electrode mixture layer did not move. 0.2 mL of the same electrolytic solution as that used in fabrication of the coin-type battery described below was dropped on a surface of the negative electrode mixture layer, the electrolytic solution was covered with a glass petri dish so as to prevent the solution from drying out, and a time taken for the electrolytic solution to permeate into the negative electrode mixture layer was visually measured.

### <Fabrication of coin-type battery>

An electrolytic solution (1 mol/L-LiPF₆, solvent: ethylene carbonate (EC)/diethyl carbonate (DEC) = 3/7 (volume ratio), containing vinylene carbonate (VC) as an additive so that its concentration was 1.0% by mass relative to the electrolytic solution to be finally obtained), was prepared.

The aforementioned negative electrode mixture layer and copper foil with a thickness of 10 mm were stacked and punched out into a disk shape with a diameter of 14 mm, and the lithium foil as a positive electrode was punched out into a disk shape with a diameter of 13 mm, to obtain a coin-shaped negative electrode (a laminate of the negative electrode mixture layer and the copper foil) and a coin-shaped positive electrode, respectively.

A microporous polyethylene film with a thickness of 20 pm was also punched out into a disk shape with a diameter of 17 mm to obtain a coin-shaped separator.

The obtained coin-shaped negative electrode, separator, and positive electrode were stacked in this order in a battery can made of stainless steel (2032 size), and then 20 µL of the electrolytic solution obtained above was injected into this battery can followed by impregnation of the electrolytic solution into the separator, positive electrode, and negative electrode.

Next, an aluminum plate (thickness: 1.2 mm, diameter: 16 mm) and a spring were placed on the positive electrode, and a battery can lid was crimped via a polypropylene gasket to air-tightly seal the battery.

Through the above procedures, a coin-type battery (that is, a coin-type lithium secondary battery) with a diameter of 20 mm and a height of 3.2 mm was obtained.

The obtained coin-type battery was charged at room temperature at 2.5 to 4.2 V, held for 0.5 to 12 hours, charged to 4.2 V, and discharged down to 2.8 V in this order several times, and the battery was stored in a fully charged state of 4.2 V (SOC 100%) at 25°C for 5 days to perform activation (aging) treatment.

### <Measurement of charge capacity and discharge capacity>

The coin-type battery after the activation treatment was charged to a constant voltage of 4.2 V at room temperature, and the charge capacity (first cycle) was measured. Next, the battery was discharged down to 2.8 V at a constant current of 0.1 C at room temperature, and the discharge capacity (first cycle) was measured. Table 2 shows the results.

### <Measurement of charging efficiency and discharging efficiency>

The same operations as those for measuring the charge capacity and discharge capacity were further repeated to measure the charge capacity (second cycle) and discharge capacity (second cycle).

A ratio of the charge capacity (second cycle) to the charge capacity (first cycle) obtained above was calculated as the charging efficiency.

The ratio of the discharge capacity (second cycle) to the discharge capacity (first cycle) obtained above was calculated as the discharging efficiency.

### [Example 7]

A battery was fabricated and evaluated in the same manner as in Example 6, except that the type of electrode binder used was changed from the electrode binder 1 to the electrode binder 6.

### [Example 8]

A battery was fabricated and evaluated in the same manner as in Example 6, except that the type of electrode binder used was changed from the electrode binder 1 to the electrode binder 6, and the amount of binder used was changed from 2.0 g to 1.5 g.

### [Example 9]

A battery was fabricated and evaluated in the same manner as in Example 6, except that the type of electrode binder used was changed from the electrode binder 1 to the electrode binder 6, and the amount of binder used was changed from 2.0 g to 1.0 g.

### [Example 10]

A battery was fabricated and evaluated in the same manner as in Example 6, except that the type of electrode binder used was changed from the electrode binder 1 to the electrode binder 7.

**[Table 2]**

| | | | Example 6 | Example 7 | Example 8 | Example 9 | Example 10 |
|---|---|---|---|---|---|---|---|
| Positive electrode | | | Li foil | Li foil | Li foil | Li foil | Li foil |
| Negative electrode | Electrode fabrication method | - | Dry method | Dry method | Dry method | Dry method | Dry method |
| | Binder | - | Binder 1 | Binder 6 | Binder 6 | Binder 6 | Binder 7 |
| | Intrinsic viscosity [η] | dl/g | 13.0 | 11.9 | 11.9 | 11.9 | 24.6 |
| | Average particle diameter | µm | 10.5 | 6.2 | 6.2 | 6.2 | 6.4 |
| Negative electrode mixture layer | Tensile strength | MPa | 1.1 | 2.2 | 1.2 | 0.6 | 2.5 |
| | Permeability of electrolytic solution | seconds | 125 | 95 | 57 | 42 | 44 |
| Battery evaluation | Charge capacity at 1^{st} cycle | mAh/g | 367.0 | 388.0 | 379.6 | 383.3 | 376.1 |
| | Discharge capacity at 1^{st} cycle | mAh/g | 306.1 | 379.2 | 366.0 | 360.2 | 356.7 |
| | Charging efficiency | % | 95.3 | 98.9 | 98.8 | 99.0 | 98.8 |
| | Discharging efficiency | % | 94.4 | 98.7 | 96.8 | 96.2 | 97.6 |

In Table 2, the intrinsic viscosity [η] and average particle size refer to the intrinsic viscosity [η] and average particle diameter d50 of the electrode binder used in the dry method.

The use of the present binder enables the fabrication of the electrode by the dry method, and the lithium ion secondary batteries of Examples 6 to 10 are found to have the excellent charge/discharge capacity and excellent charging/discharging efficiency.

## Claims

1. An electrode binder comprising an ultrahigh molecular weight olefinic polymer fine particle (A) that satisfies the following requirements (i) to (iii):
(i) an intrinsic viscosity [η] measured in a decalin solvent at 135°C is in a range of 5 to 50 dl/g;
(ii) an average particle diameter d50 in a mass-based particle size distribution by a Coulter counter method is in a range of 1 to 50 um; and
(iii) 50% by mass or more of the particles passes through a mesh sieve with an opening of 45 um.

2. The electrode binder according to claim 1, wherein the ultrahigh molecular weight olefinic polymer fine particle (A) has an average particle diameter d50 within a range of 3 to 15 um.

3. The electrode binder according to claim 1 or 2, wherein the ultrahigh molecular weight olefinic polymer fine particle (A) is an ethylenic polymer fine particle.

4. An electrode comprising the electrode binder according to any one of claims 1 to 3 and an active material.

5. The electrode according to claim 4, wherein the electrode is obtained by a dry method.

6. A lithium ion secondary battery comprising the electrode according to claim 4 or 5 and an electrolyte.

7. A method for producing an electrode, comprising
a step of dry mixing the electrode binder according to any one of claims 1 to 3 and an active material to obtain an electrode composite material, and
a step of producing an electrode comprising the electrode composite material and a current collector.
